# EUROPEAN PATENT APPLICATION

(11) **EP 2 717 080 A2**
(43) Date of publication of application: **09.04.2014**
(21) Application number: 13187025.5
(22) Date of filing: 02.10.2013
(51) Int. Cl.: G02B 6/38

(54) **Reconfigurable fiber optic cable assemblies and optical connectors**

(30) Priority: 05.10.2012 US 201261710308 P; 08.03.2013 US 201313790792
(71) Applicant: Corning Cable Systems LLC, Hickory NC 28602 (US)
(72) Inventor: Isenhour, Micah Colen, Lincolnton, NC North Carolina 28092 (US); Knecht, Dennis Michael, Hickory, NC North Carolina 28601 (US); Luther, James Phillip, Hickory, NC North Carolina 28602 (US)
(74) Representative: Sturm, Christoph

(57) **Abstract**

Reconfigurable fiber optic cable assemblies and optical connectors are disclosed. According to one embodiment, a fiber optic cable assembly includes an optical cable having a connector end and a plurality of optical fibers, a connector housing wherein the plurality of optical fibers are disposed within the connector housing, and an optical interface to which the plurality of optical fibers is optically coupled. The optical interface is rotatable with respect to the connector end of the optical cable

## Description

### RELATED APPLICATIONS

This application claims the benefit of priority under 35 U.S.C. § 120 of U.S. Application Serial No. 13/790,792 filed on March 8, 2013, and claims the benefit of priority under 35 U.S.C. § 119 of U.S. Provisional Application Serial No. 61/710,308 filed October 5, 2012, the content of both is relied upon and incorporated herein by reference in their entirety.

### BACKGROUND

### Field

The present disclosure generally relates to fiber optic cable assemblies for optical communication between electronic devices and, more particularly, to reconfigurable fiber optic cable assemblies and fiber optic connector systems.

### Technical Background

Fiber optic cables are an attractive alternative to bulky traditional conductor cables (e.g., copper), especially as data rates increase. As the use of fiber optics migrates into numerous consumer electronics applications, such as connecting computer peripherals by the use of fiber optic cable assemblies, there will be a consumer-driven expectation for cables having improved performance, compatibility with future communication protocols, and a broad range of use. Current opto-mechanical interfaces utilized to optically couple an optical cable assembly to active optical components of an electronics device require precise mechanical structures to properly align the optical fibers of the optical cable assembly with the laser(s) and/or photodiode(s) of the electronics device. As such alignments require tight tolerances, the mechanical structures become costly, and may not be rugged enough for consumer electronics applications. Further, the mechanical structures often cause the optical interface of the optical cable assembly and the electronics device to be susceptible to the build-up of foreign substances (e.g., dust, liquid, food particles, etc.) that may interfere with the propagation of optical signals between the optical cable assembly and the electronics device.

Fiber optic cable assemblies come in a variety of connector configurations. For example, the connector of the fiber optic cable may be configured as a straight connector such that the fiber optic cable is normal with respect to the coupled electronic device. Other fiber optic cables may have a right-angled connector such that the fiber optic cable extends to the right or to the left of the electronic device. However, one or more connector configurations of the fiber optic cable assembly may not be suitable for a particular device, which may require a user to purchase multiple fiber optic cables for multiple electronic devices. In other instances, it may be needed that the connector of fiber optic cable assembly be positioned at an angle other than normal or ninety degrees.

### SUMMARY

Embodiments of the present disclosure relate to fiber optic cable assemblies, fiber optic connectors, and fiber optic connector systems for optical communication between electronic devices. As an example, an optical cable assembly may have an optical connector at each end that is configured to mate with corresponding optical connectors of electronic devices so that two (or more) coupled electronics devices may communicate with one another via optical signals over the optical cable assembly.

More specifically, embodiments are directed to reconfigurable fiber optic cable assemblies wherein a plug may be rotated or pivoted to different angles with respect to a fiber optic cable. This ability to reconfigure the fiber optic cable assembly may make it more versatile, as it may be configured to optimally connect to a wide variety of electronic devices. In this regard, according to one embodiment, a fiber optic cable assembly includes an optical cable having a connector end and a plurality of optical fibers, a connector housing wherein the plurality of optical fibers are disposed within the connector housing, and an optical interface to which the plurality of optical fibers is optically coupled. The optical interface is rotatable with respect to the connector end of the optical cable

According to another embodiment, a fiber optic cable assembly includes an optical cable, a plug housing defining a plug enclosure, a ferrule within the plug housing, and a connector housing. The optical cable includes a connector end and a plurality of optical fibers. The ferrule is disposed within the plug enclosure and includes a coupling face having an optical interface that is optically coupled to the plurality of optical fibers. The connector housing is coupled to the plug housing such that the plug housing extends from the connector housing, and the plug housing and the connector housing are free to rotate with respect to the connector end of the optical cable.

According to yet another embodiment, an optical connector includes a plug housing defining a plug enclosure, a ferrule within the plug enclosure including a coupling face having an optical interface that is configured to be optically coupled to a plurality of optical fibers of an optical cable, and a connector housing coupled to the plug housing. The plug housing extends from the connector housing. The connector housing is configured to be rotatably coupled to a connector end of the optical cable such that the plug housing and the connector housing are free to rotate with respect to the connector end of the optical cable.

The receptacle includes a receptacle housing, and a ferrule body disposed within the receptacle housing, the ferrule body including a receptacle coupling face having a receptacle optical interface. The receptacle housing is configured to accept the plug housing of the optical cable assembly. Upon insertion of the plug portion into the receptacle housing, the coupling face of the translating ferrule contacts the receptacle coupling face of the ferrule body such that the translating ferrule translates back within the plug housing as the optical cable assembly is pushed into the receptacle, thereby optically coupling the optical interface of the translating ferrule with the receptacle optical interface of the receptacle.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate embodiments, and together with the description serve to explain principles and operation of the various embodiments.

### BRIEF DESCRIPTION OF THE DRAWINGS

The components of the following figures are illustrated to emphasize the general principles of the present disclosure and are not necessarily drawn to scale. The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 is a left-side perspective view of an exemplary fiber optic cable assembly in a first configuration according to one embodiment;

FIG. 2 depicts the fiber optic cable assembly in a second configuration wherein a plug is rotated 180 degrees from the first configuration depicted in FIG. 1;

FIG. 3 is a left-side perspective view of an exemplary fiber optic cable assembly in a first configuration according to one embodiment;

FIG. 4 is an exploded, left-side perspective view of the fiber optic cable assembly depicted in FIG. 3;

FIG. 5 is an exploded, right-side perspective view of the fiber optic cable assembly depicted in FIG. 3;

FIG. 6 is a partially assembled, perspective view of the fiber optic cable assembly depicted in FIG. 3;

FIG. 7 depicts the fiber optic cable assembly of FIG. 3 in a second configuration that is 90 degrees from the configuration depicted in FIG. 3;

FIG. 8 is a partially assembled, perspective view of the fiber optic cable assembly depicted in FIG. 3, wherein the upper half of the connector housing and the upper member are removed and the translating ferrule is in an unretracted position;

FIG. 9 is a partially assembled, perspective view of the fiber optic cable assembly depicted in FIG. 3, wherein the upper half of the connector housing and the upper member are removed and the translating ferrule is in a retracted position;

FIG. 10 is a front perspective view of an exemplary receptacle configured to mate with the fiber optic cable assembly depicted in FIG. 3 according to one embodiment;

FIG. 11 is a bottom perspective view of the receptacle depicted in FIG. 10; and

FIG. 12 is a perspective view of an exemplary fiber optic connector system including the fiber optic cable assembly depicted in FIG. 3 and the receptacle depicted in FIG. 10.

### DETAILED DESCRIPTION

Embodiments are directed to fiber optic cable assemblies, fiber optic connectors, and fiber optic connector systems, wherein electrical signals generated by coupled host and/or client electronic devices are converted to optical signals by a transceiver circuit and transmitted over one or more optical fibers. More specifically, embodiments described herein provide fiber optic cable assemblies and fiber optic connectors wherein the fiber optic connector is rotatable with respect to the fiber optic cable of the fiber optic cable assembly. A user of the fiber optic cable assembly may pivot or rotate the fiber optic connector to position the fiber optic connector to a desired angle with respect to the fiber optic cable depending on the optimum position of the fiber optic cable assembly with respect to the electronic device that the fiber optic cable assembly is coupled to. For example, if a communications port of an electronic device is on a right edge of the electronic device, the user may rotate the fiber optic connector such that the fiber optic connector and the fiber optic cable form a right angle with the fiber optic cable extending to the right and away from the electronic device. The embodiments described herein enable a user to rotate or pivot the fiber optic connector to reconfigure the fiber optic cable assembly to form a right-angled connector (in either left or right directions), a straight connector (normal with respect to the electronic device), or any angle in between. The fiber optic cable assemblies described herein allow the fiber optic connector to be rotated without significant movement of the optic fibers within the fiber optic connector.

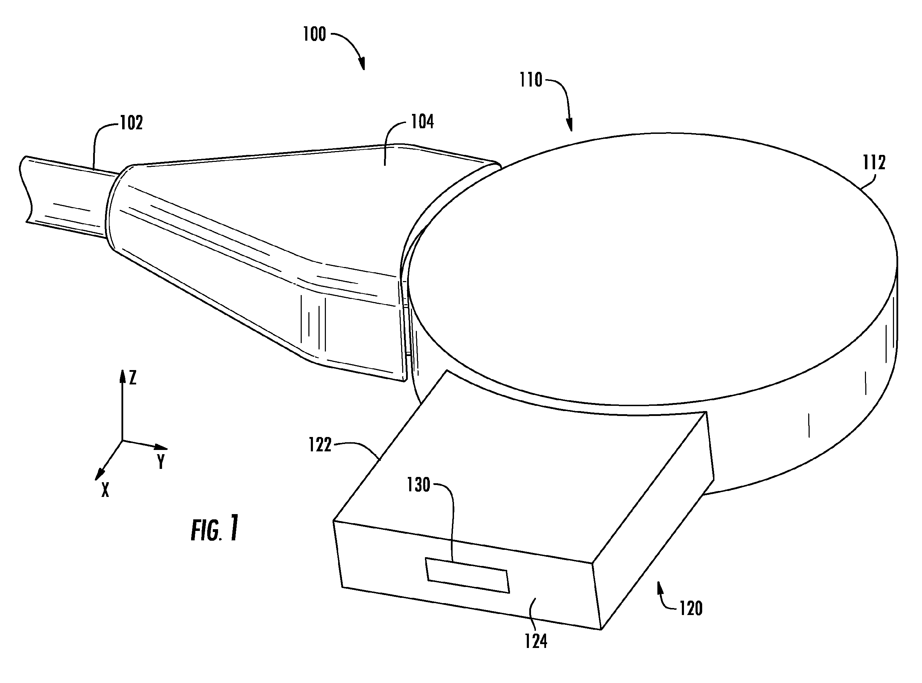

Referring now to FIG. 1, a reconfigurable fiber optic cable assembly 100 according to one embodiment is illustrated. The fiber optic cable assembly 100 includes a fiber optic cable 102 that maintains a plurality of optical fibers (not shown in FIG. 1). The fiber optic cable 102 terminates at a connector end 104 that is configured as a strain relief or a boot having a width or diameter that is greater than the fiber optic cable 102 portion. In other embodiments, the connector end 104 of the fiber optic cable 102 may simply be a terminated region of the fiber optic cable 102 without a strain relief or boot feature. The fiber optic cable assembly 100 further includes a connector housing 110 having a connector body 112. A plug portion 120 extends from the connector housing 110. The plug portion 120 may include a plug housing 122, and have a coupling face 124 for mating with a corresponding coupling face of a receptacle of an electronic device (or other fiber optic cable assembly). The fiber optic cable assemblies and connectors disclosed herein may be optically connected to one or more optical fibers in another fiber optic connector or to an optical device, such as a light-emitting diode (LED), laser diode, vertical-cavity surface-emitting laser (VCSEL), or opto-electronic device for light transfer.

The coupling face 124 includes an optical interface 130 for optically coupling to a corresponding optical interface of a receptacle of an electronic device (or other fiber optic cable assembly). The optical interface 130 may include optical components that enable the transmission of optical signals between optically coupled fiber optic cable assemblies and electronic devices. In one embodiment, the optical interface 130 configured as the fiber ends of the plurality of optical fibers, which may be maintained behind an optically transparent window (e.g., an optically transparent window made of glass). In another embodiment, the optical interface 130 may include lenses, such as refractive lenses, that are coupled to the plurality of optical fibers to aid in the passing of optical signals between optically coupled fiber optic cable assemblies 100 and electronic devices. The refractive lenses may also be maintained behind an optically transparent window, or be formed within the optically transparent window (e.g., by molding).

Use of an optically transparent window may enable a planar optical interface with minimal mechanic feature such that the coupling face 124 and optical interface 130 are liquid displacing when connected to a mated optical connector. Liquid that may be present on either optical interface may be forced outward such that optical signals may pass freely between the coupled optical interfaces.

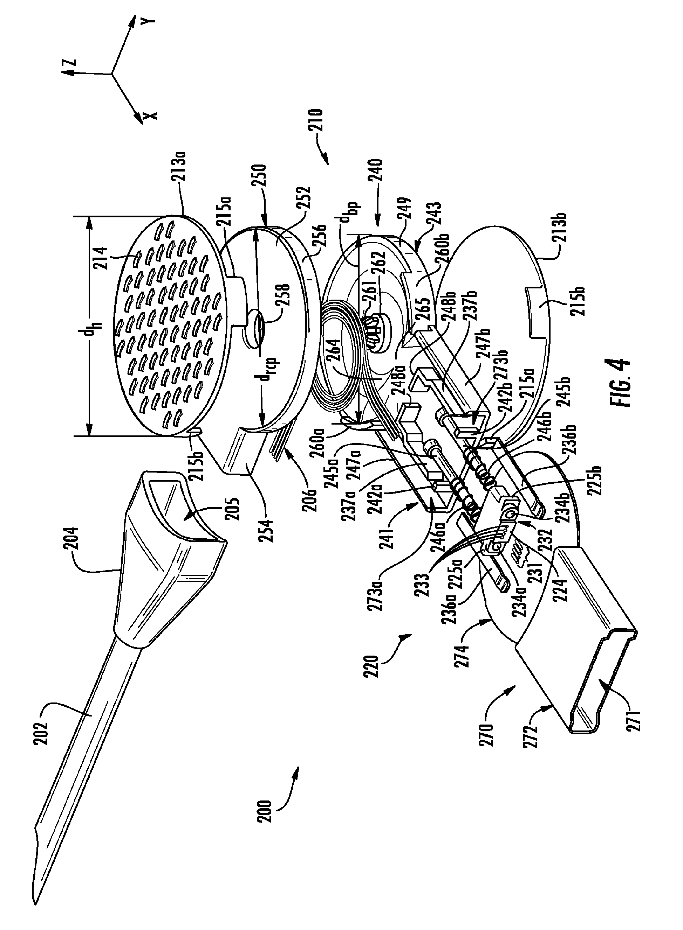

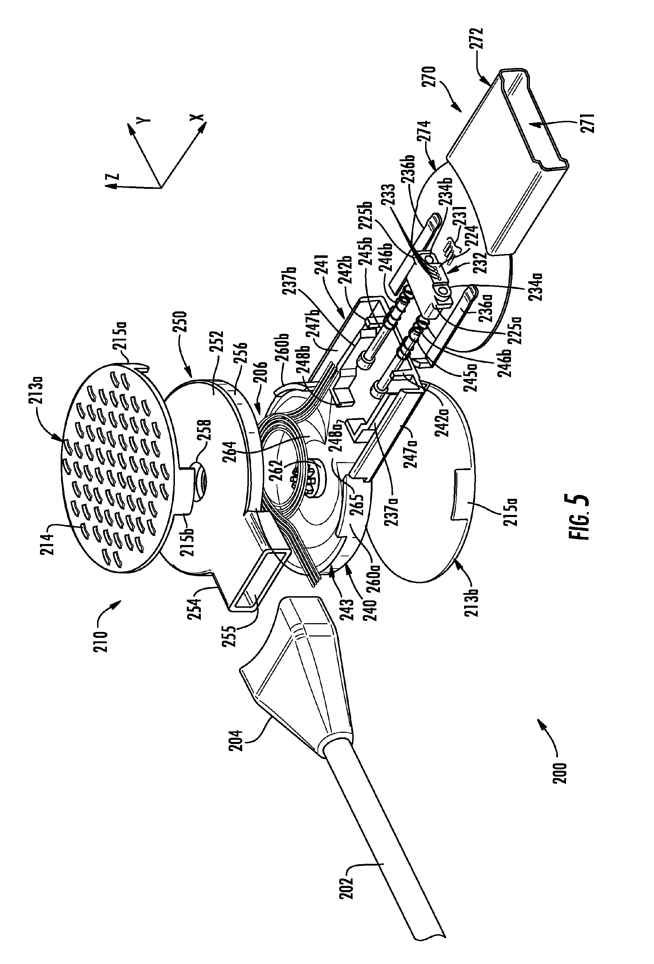

Embodiments may also utilize gradient-index (GRIN) lenses 231 (see FIGS. 4 and 5) as the optical interface 130. GRIN lenses focus light through a precisely controlled radial variation of the lens material's index of refraction from the optical axis to the edge of the lens. GRIN lenses with flat surfaces may collimate light emitted from an optical fiber or to focus an incident beam into an optical fiber. The GRIN lens can be provided in the form of a glass rod that is disposed in a lens holder (e.g., a ferrule). The flat surfaces of a GRIN lens allow easy bonding or fusing of one end to an optical fiber disposed inside the fiber optic connector, with the other end of the GRIN lens disposed on the coupling face 124. The flat surface on the end face of a GRIN lens can reduce aberrations, because the end faces can be polished to be planar to slightly inset with respect to the coupling face 124. The flat surface of the GRIN lens allows for easy cleaning of end faces of the GRIN lens.

It should be understood that only one end of the exemplary fiber optic cable assembly 100 is depicted in FIG. 1, and that the opposite end may also include a similar connector housing 110 and plug portion 120. Although the fiber optic cable assembly 100 is depicted as a male connector in FIG. 1, it is contemplated that embodiments may be configured as a female connector. For example, the plug portion 120 may be configured as a rotatable receptacle that may mate with a corresponding male optical connector.

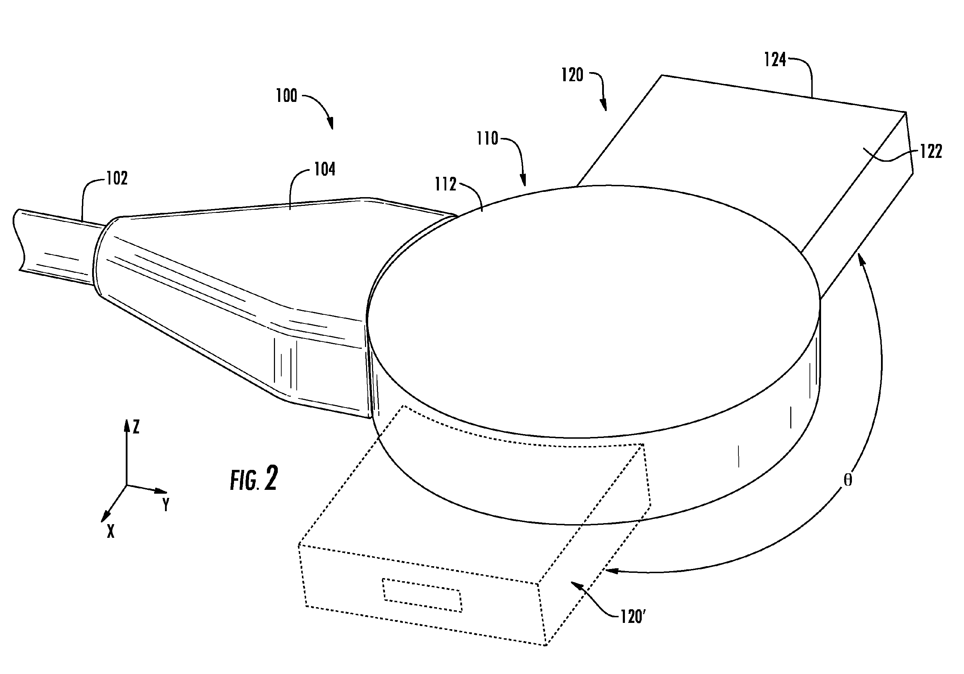

As shown in FIG. 1, the plug portion 120 may be rotated with respect to the connector end 104 of the fiber optic cable 102 as indicated by arrow A. FIG. 2 depicts the plug portion 120 having been rotated to a new position at an angle θ that is 180 degrees from the original position of the plug portion 120 depicted in FIG. 1 and shown with dashed lines as phantom plug portion 120' in FIG. 2. In this manner, the plug portion 120 may be positioned "up" or "down" with respect to the connector end 104 of the fiber optic cable 102. It should be understood that no directional limitations are intended by the use of terms such as "up," "down," "bottom," "lower," "upper," "top," "left," "right," etc., and that such terms are used only for convenience. Embodiments may be configured such that the plug portion 120 may be rotated or pivoted at any angle between 0 and 180 degrees. For example, the plug portion 120 may be positioned such that it is aligned with the axis defined by the connector end 104 (e.g., along the *y*-axis such that the plug portion 120 is in a normal position with respect to a coupled electronic device). In other embodiments, the plug portion 120 may be rotated or pivoted at an angle greater than 180 degrees.

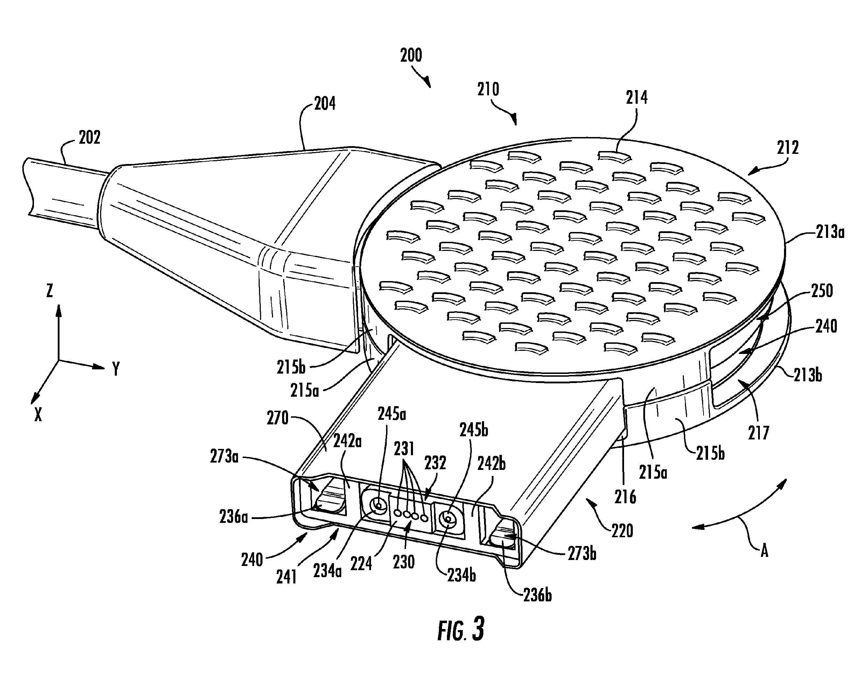

Referring now to FIG. 3, an exemplary fiber optical cable assembly 200 according to one embodiment is depicted. The fiber optic cable assembly 200 generally includes a fiber optic cable 202 that maintains a plurality of optical fibers 206 (see FIG. 4). Similar to embodiment depicted in FIG. 1, the fiber optic cable 202 terminates at a connector end 204 that is configured as a strain relief or a boot having a width or diameter that is greater than the fiber optic cable 202 portion. The fiber optic cable assembly 200 further includes a connector assembly 210 generally comprising a connector housing 212 and a plug 220 extending from the connector housing 212. In the illustrated embodiment, the connector housing 212 comprises an upper half 213a and a lower half 213b that are connected together to form an enclosure in which the optical fibers 206 and other components are disposed (see exploded views of FIG. 4 and 5). The upper half 213a and the bottom half 213b may be configured as identical components. In the illustrated embodiment, the upper half 213a and the bottom half 213b each include tactile features 214 for decorative and tactile purposes. Other embodiments may not include the tactile features 214, or tactile features having a configuration that is different from that illustrated in FIG. 3.

Each of the upper half 213a and the bottom half 213b may comprise a first flange 215a and a second flange 215b such that the first flange 215a of the upper half 213a contacts the second flange 215b of the bottom half 213b, and the second flange 215b of the upper half 213a contacts the first flange 215a of the bottom half 213b. The connected upper half 213a and bottom half 213b of the connector housing 212 forms a first circumferential opening 216 through which the plug 220 protrudes, and a larger, second circumferential opening 217 by which the connector assembly 210 may rotate, as described below.

The first circumferential opening 216 has a width that is equal to or slightly larger than the width of the plug 220 such that the plug 220 is maintained by the connector housing 212. The plug 220 generally comprises a plug housing 270 that surrounds a plug portion 241 of a base member 240 that is disposed within the connector housing 212 and the plug housing 270. More detail regarding the base member 240 and other internal components are described below with reference to FIGS. 4 and 5. In the illustrated embodiment, a ferrule 232 is disposed within an enclosure defined by the plug portion 241 and the plug housing 270. In some embodiments, the ferrule 232 is a translating ferrule that is free to translate within the plug enclosure. In other embodiments, the ferrule may be stationary within the plug enclosure.

In the illustrated embodiment, the ferrule is configured as a translating ferrule 232. The translating ferrule 232 is positioned between a first base post 242a and a second base post 242b of the plug portion 241. The translating ferrule 232 comprises a coupling face 224 and an optical interface 230 that is defined by a plurality of GRIN lenses 231 that are optically coupled to the plurality of optical fibers 206. Other lens configurations may also be utilized, such as refractive lenses or simply fiber ends, as described above. The translating ferrule 232 further includes a first bore 234a and a second bore 234b through which a first pin 245a and a second pin 245b are respectively disposed. As described in detail below, the translating ferrule 232 is free to translate on the first and second pins 245a, 245b within the plug housing 270 (e.g., along the *x*-axis in FIG. 3).

The first and second base posts 242a, 242b of the plug portion 241 and the plug housing 270 further define first and second electrical openings 273a, 273b. Electrical contacts 236a, 236b may be provided in first and second electrical openings 273a, 273b in embodiments that enable electrical power and/or signals to be passed over the fiber optic cable assembly 200 (e.g., a hybrid optical/electrical cable).

The plug 220 and the connector assembly 210 are free to rotate with respect to the connector end 204 as indicated by arrow **A**. The plug 220 and connector assembly 210 may rotate by up to 180 degrees in one embodiment. In another embodiments, the plug 220 and connector assembly 210 may rotate up to less than or more than 180 degrees.

Referring now to both FIGS. 4 and 5, two perspective, exploded views of the fiber optic cable assembly 200 illustrated in FIG. 3 are depicted. A base member 240 and an upper member 250 that is coupled to the base member 240 are disposed within the enclosure defined by the upper half 213a and the bottom half 213b of the connector housing 212. The upper half 213a and bottom half 213b have a diameter **dₕ**. The base member 240 generally comprises the plug portion 241 and a circular portion 243 having a diameter **d_{bp}** that is slightly less than the diameter **dₕ** of the upper and bottom halves 213a, 213b. The circular portion 243 is positioned adjacent to the bottom half 213b of the connector housing 212, and the plug portion 241 extends between the first and second flanges 215a, 215b of the bottom half 213b of the connector housing 212.

The plug portion 241 of the exemplary embodiment includes first and second external walls 247a, 247b, the first and second base posts 242a, 242b, and first and second internal walls 237a, 237b, which define the first and second electrical openings 273a, 273b. The first and second electrical contacts 236a, 236b may be positioned in the first and second electrical openings 273a, 273b and may be electrically coupled to additional electrical conductors, such as wires (not shown).

A rear portion of the first internal wall 237a defines a first pin engagement surface 248a, and a rear portion of the second internal wall 237b defines a second pin engagement surface 248b. The first and second pins 245a, 245b may be coupled to the first and second pin engagement surfaces 248a, 248b, respectively, by any appropriate coupling means. Further, the first and second pin engagement surfaces 248a, 248b define an opening through which the optical fibers 206 may pass into the plug portion 241.

In the illustrated embodiment, first and second bias members (e.g., springs) 246a, 246b are disposed around the first and second pins 245a, 245b, respectively, to bias the translating ferrule 232 toward the plug opening 271 of the plug housing 270. Other bias member configurations are also possible.

The coupling face 224 of the exemplary translating ferrule 232 protrudes slightly from the remainder of the front surface to minimize the surface area of the coupling face 224 that contacts a mated coupling face. In other embodiments, the entire front surface of the translating ferrule 232 acts as the coupling face 224 with zero offset. The translating ferrule 232 further includes first and second protrusions 225a, 225b that act as stops against the first and second base posts 242a, 242b to keep the translating ferrule from escaping the enclosure of the plug housing through the plug opening 271.

The illustrated translating ferrule 232 includes a plurality of GRIN bores 233 in which the plurality of GRIN lenses 231 are disposed. The number of GRIN bores 233 and GRIN lenses 231 depends on the number of optical fibers 206. The end faces of the GRIN lenses 231 may be substantially planar or slightly inset (e.g. up to 50 µm) from the coupling face 224 so as to prevent the build-up of debris in the GRIN bores 233 that may block optical signals from passing through the end faces of the GRIN lenses 231. The first and second bias members 246a, 246b contact a rear surface of the translating ferrule 232 to bias the translating ferrule 232 toward the plug opening 271.

The plug 220 further includes the plug housing 270, which includes a plug enclosure portion 272 and a circular portion 274. The circular portion 274 has a diameter such that it fits on the bottom half 213b of the connector housing 212. The plug enclosure portion 272 is shaped to cover the plug portion 241 of the base member and act as the plug housing. The plug enclosure portion 272 is positioned between the first and second flanges 215a, 215b of the bottom half 213b of the connector housing 212. In other embodiments, the plug housing 270 may not include the circular portion 274 and may be coupled to the bottom half 213b of the connector housing 212 by other means.

Referring once again to the base member 240, the circular portion 243 includes a first flange 260a and a second flange 260b that extend from a circumferential wall 249. The circular portion 243 of the base member 240 is configured to be positioned on top of the circular portion 274 of the plug housing 270 such that the plug portion 241 extends between the first and second flanges 215a, 215b.

The circular portion 243 of the base member 240 may further include a discontinuous, sloping wall 264 that defines an opening 265 through which the optical fibers 206 pass. A fiber post 261 extends from a central region of the circular portion 243. The optical fibers 206 are wrapped around the fiber post 261, which may help in controlling the movement of the optical fibers 206 as the plug 220 and connector assembly 210 are rotated. The fiber post 261 further comprises engagement features 262 that are configured to snap to the upper member 250, as described below.

The upper member 250 comprises an upper circular portion 252 and an engagement feature 254. The engagement feature 254 is coupled to the connector end 204 of the fiber optic cable 202. In the illustrated embodiment, the engagement feature 254 is a protrusion extending from the upper circular portion 252 that fits within a connector end opening 205 of the connector end 204. The engagement feature 254 and the connector end 204 may be connected by any appropriate means, such as by an adhesive, for example. In another embodiment, the connector end 204 may be inserted into an opening 255 of the engagement feature 254 and then adhered together.

The upper circular portion 252 includes a hole 258 that is sized to accept the engagement features 262 of the fiber post 261. After assembly of the internal components of the plug 220 and the optical fibers 206 are wrapped around the fiber post 261, the upper member 250 may be pressed onto the base member 240 such that the engagement features 262 of the fiber post 261 snap onto the perimeter of the hole 258, thereby coupling the upper member 250 to the base member 240. The upper circular portion 252 further comprises a circumferential lip 256 that contacts (or nearly contacts) the circumferential wall 249 (perimeter) of the base member 140 when the upper member 250 and the base member 240 are coupled together. The upper member 250 is rotatably coupled to the base member 240 by the engagement features 262 of the fiber post 261.

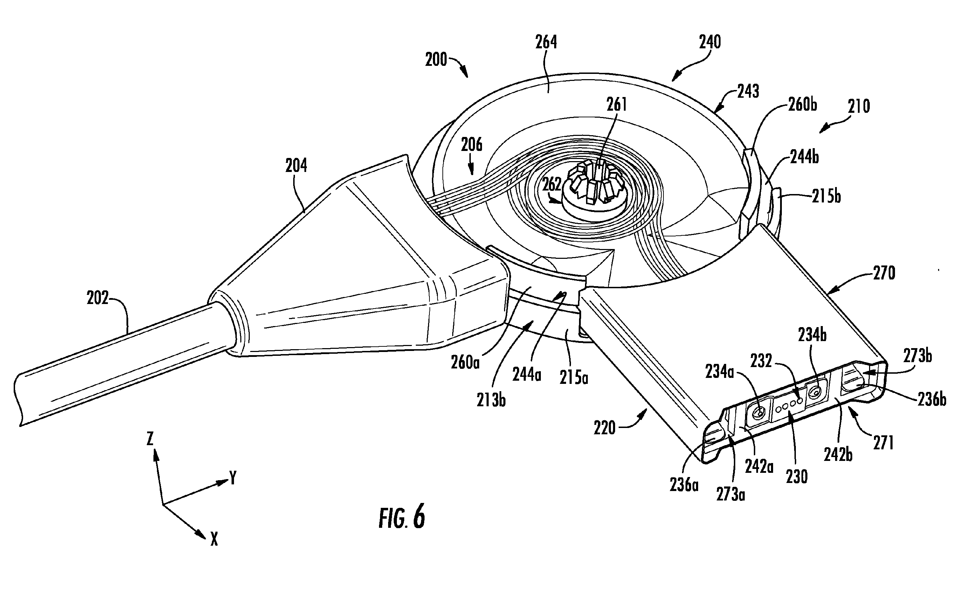

FIG. 6 depicts a partially assembled fiber optic cable assembly 200 with the upper member 250 removed. The first and second flanges 215a, 215b of the bottom half 213b of the connector housing and the first and second flanges 260a, 260b of the base member 240 form first and second gaps 244a, 244b, respectively, into which the circumferential lip 256 is positioned when the fiber optic cable assembly 200 is fully assembled.

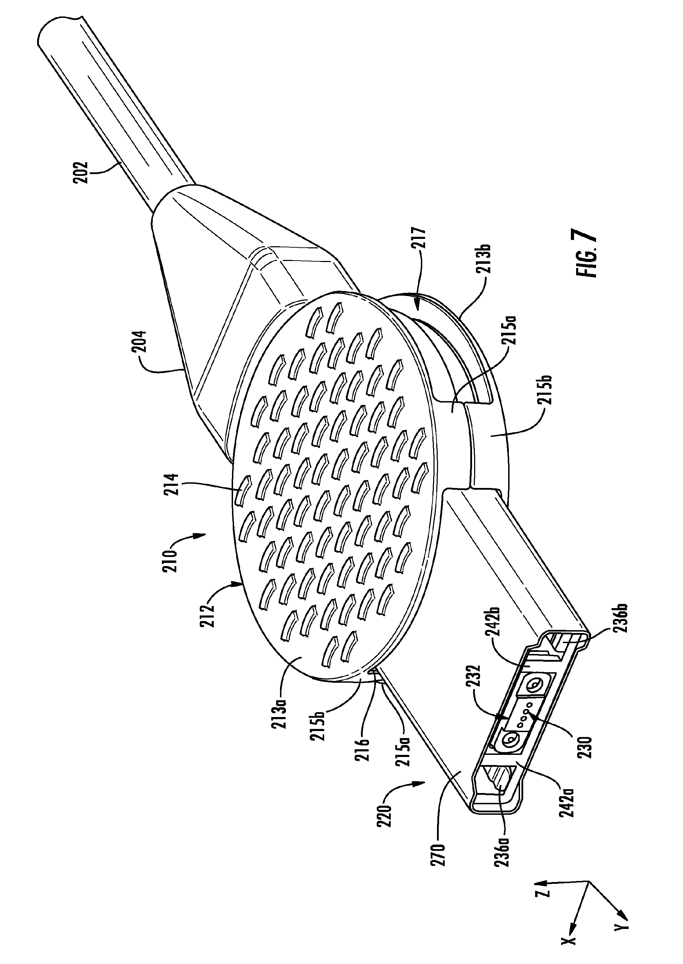

Referring once again to FIG. 3, when the fiber optic connector assembly 200 is fully assembled, the engagement feature 254 (the view of the engagement feature 254 is obscured by the connector end 204) is positioned within the larger, second circumferential opening 217 defined by the connector housing 212. Accordingly, the engagement feature 254 is free to move within the second circumferential opening 217 such that the plug 220 and the connector end 204 may be rotated with respect to one another to reconfigure the fiber optic cable assembly 200 to a desired configuration. FIG. 7 depicts the plug 220 rotated ninety degrees with respect to the position depicted in FIG. 3 such that the connector end 204 of the fiber optic cable 202 will be substantially normal to a receptacle of a mated electronic device or fiber optic cable. The engagement feature 254 and connector end 204 are now positioned at a midpoint of the second circumferential opening 217. In the illustrated embodiment, the plug 220 may be rotated at any angle between zero and 180 degrees. The angle may be increased to greater than 180 degrees by increasing the size of the second circumferential opening 217.

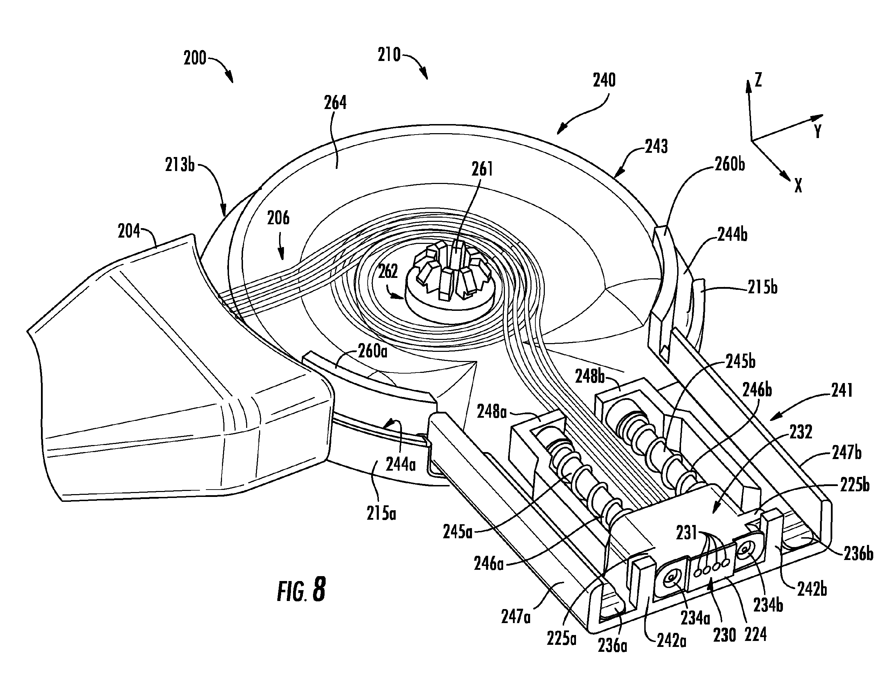

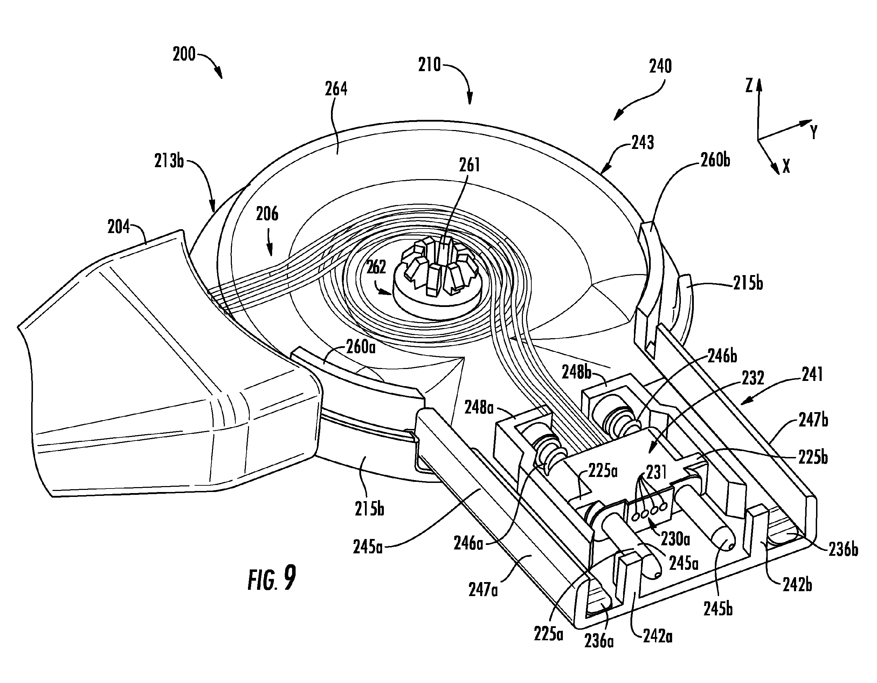

FIGS. 8 and 9 depict a partially assembled view of the fiber optic cable assembly 200 with the upper member 250 and the connector housing 212 removed. FIG. 8 shows the translating ferrule 232 in a biased state, as when the fiber optic cable assembly 200 is not connected to a mated receptacle. The first and second protrusions 225a, 225b contact the first and second base posts 242a, 242b to position the coupling face 224 at the connector opening. FIG. 9 shows the translating ferrule 232 translated back within the plug portion 241 along the negative *x*-axis direction. As described in detail below, the translating ferrule 232 may translate back within the plug portion 241 by pressing the coupling face 224 on a coupling face of a mating receptacle such that the coupling face of the mating receptacle pushed the translating ferrule 232 along the negative *x*-axis (i.e., back within the plug housing 270 and plug portion 241). The first and second bias members 246a, 246b are compressed between the rear surface of the translating ferrule 232 and the first and second pin engagement surfaces 248a, 248b.

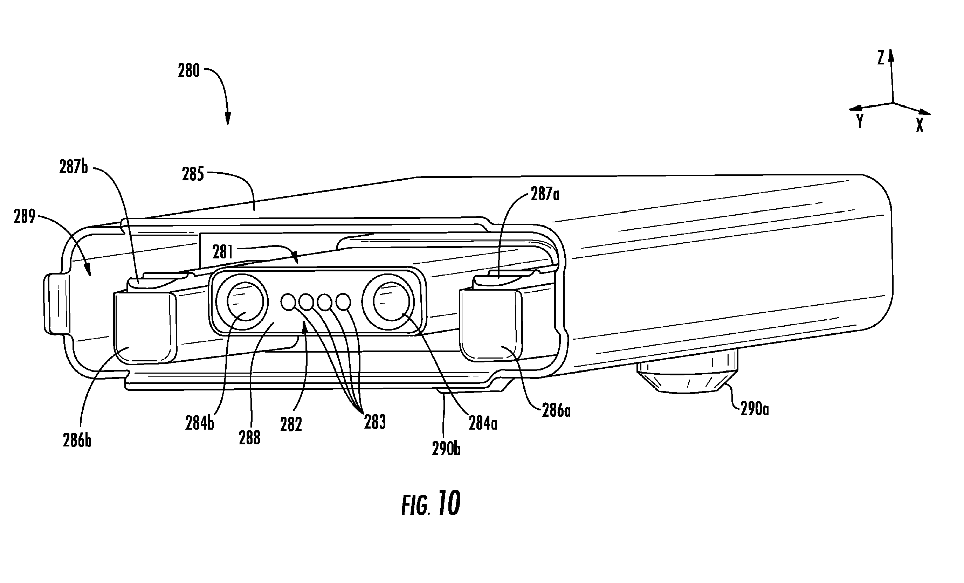

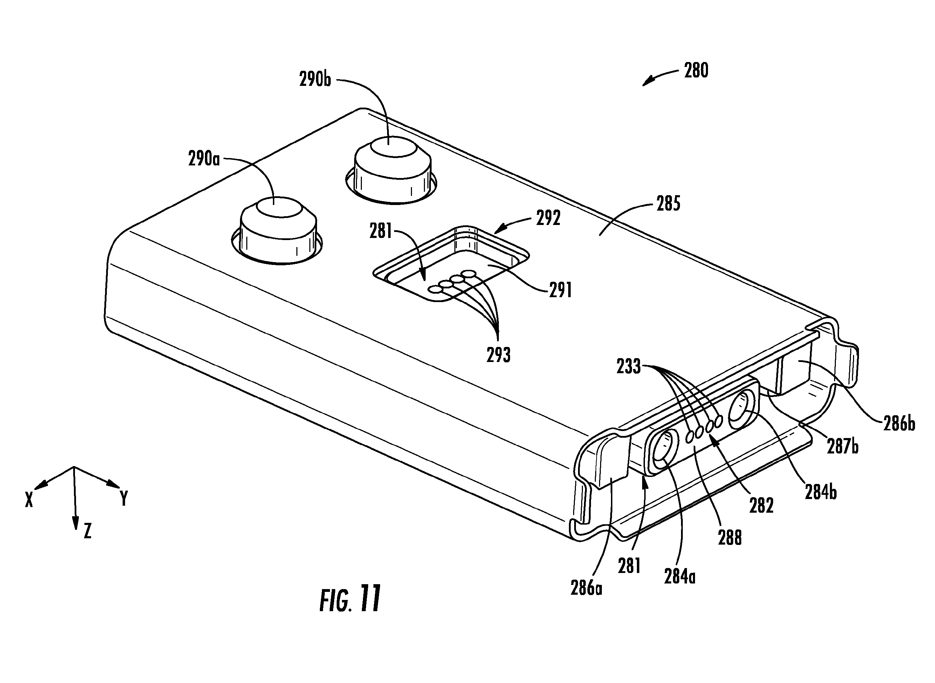

Referring now to FIGS. 10 and 11, an exemplary receptacle 280 configured to receive the fiber optic cable assembly 200 depicted in FIGS. 3-9 is illustrated. The receptacle 280 may be included as a communications port of an electronic device, for example. The receptacle 280 generally comprises a receptacle housing 285 and a ferrule body 281 disposed within the receptacle housing 285. The receptacle 280 further comprises a first prong 286a and a second prong 286b configured to be inserted into the first and second electrical openings 273a, 273b, respectively, to provide additional support between the mated fiber optic cable assembly 200 and receptacle 280. The first and second prongs 286a, 286b may further include first and second receptacle electrical contacts 287a, 287b to be electrically coupled to the first and second electrical contacts 236a, 236b of the fiber optic cable assembly 200. In other embodiments, the receptacle 280 may not include first and second prongs.

The receptacle housing 285 forms an enclosure about the ferrule body 281 and the first and second receptacle electrical contacts 287a, 287b. The ferrule body 281 extends from the rear of the enclosure defined by the receptacle housing 285 such that a coupling face 288 of the ferrule body 281 is positioned near an opening of the receptacle housing 285. The coupling face 288 includes an optical interface 282 that may be configured as described above with respect to the optical interface 230 of the fiber optic cable assembly 200 (e.g., optical fiber ends, refractive lenses, GRIN lenses, etc.). In the illustrated embodiment, the optical interface 282 is defined by a plurality of GRIN lenses 283 that are disposed within bores of the ferrule body 281. The end faces of the GRIN lenses 283 may be substantially planar, or slightly inset, with respect to the optical interface 282, as described above. In some embodiments, the GRIN lenses 283 may be optically coupled to additional optical components within the ferrule body 281, such as waveguides, fiber stubs and the like. In other embodiments, the ferrule body 281 is made of a material that is transmissive to the optical signals and additional optical components are not utilized.

The ferrule body 281 further includes first and second receptacle bores 284a, 284b that are configured to receive the first and second pins 245a, 245b, respectively, when the fiber optic cable assembly 200 is connected to the receptacle 280. The first and second receptacle bores 284a, 284b may be tapered to ease the insertion of the first and second pins 245a, 245b.

A gap 289 is present between the receptacle housing 285 and the ferrule body 281 and the first and second receptacle electrical contacts 287a, 287b. When the receptacle 280 is connected to a fiber optic cable assembly 200, the plug housing 270 of the fiber optic cable assembly 200 is positioned within the gap 289 such that the receptacle housing 285 surrounds the plug housing 270 of the fiber optic cable assembly 200.

Referring specifically to FIG. 11, a bottom surface 291 of the receptacle housing 285 includes an opening 292 to allow optical signals propagating within the ferrule body to pass to and from active optical components of the electronic device, such as laser diodes and photodiodes of an optical transceiver circuit. The illustrated ferrule body 281 includes an internal angled surface (not shown) to redirect optical signals by total internal reflection (e.g., to redirect the optical signals by ninety degrees). A bottom surface 291 of the ferrule body 281 of the illustrated embodiment further includes additional lens components 293 to aid in optically coupling the ferrule body 281 to the active optical components of the electronic device. In one embodiment, the additional lens components are configured as refractive lenses that focus and expand the optical signals propagating therethrough.

The exemplary receptacle 280 further includes a first electrical terminal 290a and a second electrical terminal 290b that extend from the bottom surface of the receptacle housing 285. The first and second electrical terminals 290a, 290b are electrically isolated from the receptacle housing 285 and electrically coupled to the first and second receptacle electrical contacts 287a, 287b, respectively. The first and second electrical terminals 290a, 290b may be configured to be positioned within sockets of the electronic device (e.g., sockets of a printed circuit board (PCB) within the housing of the electronic device). For example, the first and second electrical terminals 290a, 290b may be soldered or otherwise electrically coupled to corresponding connections on the PCB of the electronic device.

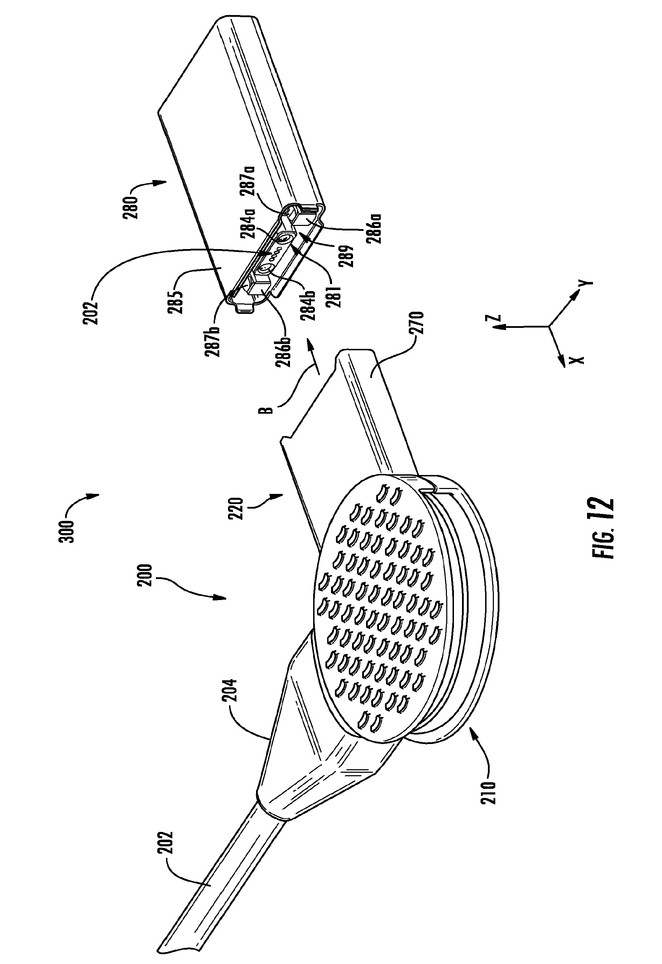

Referring now to FIG. 12 and generally to FIGS. 3-11, a fiber optic connector system 300 is depicted. The fiber optic connector system 300 includes a fiber optic cable assembly 200 as shown in FIGS. 3-9, and a corresponding receptacle 280 as shown in FIGS. 10 and 11. The fiber optic cable assembly 200 is configured as having a right-angle connector that is opposite from the configuration of the fiber optic cable assembly 200 shown in FIG. 3. As described above, the plug 220 and connector assembly 210 may be rotated or pivoted to a plurality of angles with respect to the connector end 204 of the fiber optic cable 202.

To couple the fiber optic cable assembly 200 to the receptacle 280, a user may direct the plug 220 toward the receptacle 280, as indicated by arrow **B**, to insert the plug housing 270 into the gap 289 defined by the receptacle housing 285. The first and second pins 245a, 245b are inserted into the first and second receptacle bores 284a, 284b, respectively, and the first and second prongs 286a, 286b are inserted into the first and second electrical openings 273a, 273b, respectively, thereby maintaining mechanical coupling between the fiber optic cable assembly 200 and the receptacle 280. The optical interface 230 of the fiber optic cable assembly 200 is aligned with and contacts the optical interface 282 of the receptacle 280. Because both optical interfaces 230, 282 are substantially planar, any liquid that is present on either optical interface 230, 282 is displaced outwardly away from the end faces of the coupled GRIN lenses 231,283. The fiber optic cable assembly 200 may be decoupled from the receptacle 280 by pulling the fiber optic cable assembly 200 from the receptacle 280.

It should now be understood that embodiments are directed to fiber optic cable assemblies, fiber optic connector assemblies, and fiber optic connector systems having a reconfigurable plug that may be rotated or pivoted to a plurality of angles, depending on the nature of the electronic device (or other cable assembly) to which the plug is connected. Such a reconfigurable plug provides flexibility to the fiber optic cable assembly, enabling the fiber optic cable assembly to be arranged in a plurality of configurations.

## Claims

1. A fiber optic cable assembly comprising:
an optical cable comprising a connector end and a plurality of optical fibers;
a connector housing, wherein the plurality of optical fibers is disposed within the connector housing; and
an optical interface coupled to the plurality of optical fibers, wherein the optical interface is rotatable with respect to the connector end of the optical cable.

2. The fiber optic cable assembly of claim 1, wherein the optical interface comprises a plurality of GRIN lenses, and the plurality of optical fibers are optically coupled to the plurality of GRIN lenses.

3. The fiber optic cable assembly of claims 1 or 2, further comprising a fiber post within the connector housing, wherein the plurality of optical fibers are wrapped around the fiber post.

4. The fiber optic cable assembly of any one of claims 1-3, wherein:
the connector housing comprises a circumferential opening; and
at least a portion of the connector end is free to move within the circumferential opening.

5. The fiber optic cable assembly of any one of claims 1-4, further comprising a plug portion extending from the connector housing, wherein:
the plug portion comprises a coupling face;
the optical interface is located on the coupling face; and
the connector end of the optical cable is rotatably coupled to the connector housing such that the plug portion is free to rotate with respect to the connector end of the optical cable.

6. The fiber optic cable assembly of any one of claims 1-4, further comprising a base member rigidly coupled to the plug portion and the connector housing, and an upper member rigidly coupled to the connector end of the optical cable, wherein the base member and the upper member are free to rotate with respect to one another.

7. The fiber optic cable assembly of claim 1, wherein:
the connector housing is circular;
the base member comprises a circular portion;
the plug portion extends from the circular portion of the base member;
the upper member comprises an upper circular portion and an engagement feature extending from the upper circular portion; and
the engagement feature is configured to engage the connector end of the optical cable.

8. The fiber optic cable assembly of claim 7, wherein the circular portion of the base member comprises a fiber post, wherein the plurality of optical fibers is wrapped around the fiber post.

9. The fiber optic cable assembly of claim 8, wherein the upper member comprises a hole, and at least a portion of the fiber post is positioned within the hole.

10. The fiber optic cable assembly of any one of claims 7-9, wherein a diameter of the upper circular portion is greater than a diameter of the circular portion of the base member and is less than a diameter of the connector housing.

11. The fiber optic cable assembly of any one of claims 7-10, wherein the plug portion comprises a plug housing that defines a plug enclosure, and a translating ferrule disposed within the plug enclosure, wherein the coupling face is on the translating ferrule.

12. The fiber optic cable assembly of claim 11, wherein the translating ferrule comprises a plurality of GRIN lenses that is optically coupled to the plurality of optical fibers.

13. The fiber optic cable assembly of claims 11 or 12, wherein:
the translating ferrule comprises a first bore and a second bore; and
the plug portion comprises a first pin and a second pin within the plug housing and disposed within the first bore and the second bore, respectively, such that the translating ferrule is free to translate on the first pin and the second pin.

14. The fiber optic cable assembly of any one of claims 7-13, wherein the plug portion comprises a first bias member and second bias member positioned around the first pin and the second pin, respectively, and are configured to bias the coupling face of the translating ferrule at an opening of the plug housing when the fiber optic cable assembly is in a disconnected state.
